# EUROPÄISCHE PATENTSCHRIFT

(11) **EP 1 986 850 B1**
(45) Veröffentlichungstag und Bekanntmachung des Hinweises auf die Patenterteilung: **13.04.2016**
(21) Anmeldenummer: 07712162.2
(22) Anmeldetag: 07.02.2007
(51) Int. Cl.: B32B 37/12, B32B 37/14, B05B 3/10

(54) **VERFAHREN ZUR HERSTELLUNG VON LEICHTBAUPLATTEN**
METHOD FOR PRODUCING LIGHTWEIGHT BUILDING PANELS
PROCÉDÉ POUR PRODUIRE DES PANNEAUX LÉGERS

(30) Priorität: 16.02.2006 EP 06110019
(43) Veröffentlichungstag der Anmeldung: 05.11.2008
(73) Patentinhaber: BASF SE, 67056 Ludwigshafen am Rhein (DE)
(72) Erfinder: CALGUA, Erwin, 67480 Edenkoben (DE); THATER, Michael, 49424 Goldenstedt (DE); SCHMIT, Ansgar, 49078 Osnabrück (DE); SCHAPER, Bernd, 49356 Diepholz (DE); GLEINIG, Erhard, 01968 Senftenberg (DE); FRIEDL, Wolfgang, 83646 Bad Tölz (DE); BEINS, Hans-Peter, 83670 Bad Heilbrunn (DE)
(74) Vertreter: BASF IP Association
(86) Internationale Anmeldenummer: PCT/EP2007/051157
(87) Internationale Veröffentlichungsnummer: WO 2007/093538

(56) Entgegenhaltungen:
- WO-A-2006/120234
- JP-A- 11 179 245
- US-A- 3 246 058
- US-A- 3 749 315
- US-A- 5 851 339

## Beschreibung

Gegenstand der Erfindung ist ein Verfahren zur Herstellung von Leichtbauplatten.

Leichtbauplatten sind Verbundelemente, die aus zwei Decklagen und mindestens einer zwischen diesen Decklagen angeordneten und mit diesen verklebten Kernlage bestehen. Sie werden beispielsweise in der Möbelindustrie oder als Leichtbauelemente in der Bauindustrie verwendet.

Derartige Platten sind seit langem bekannt und beispielsweise beschrieben in der Deutschen Patentschrift Nr. 670090.

Als Decklagen kommen zumeist Holzplatten, insbesondere Spanplatten, mitteldichte Faserplatten (MDF-Platten) oder Platten aus ausgerichteten Spänen (OSB-Platten) sowie Kunststoffplatten, Metallbleche, insbesondere solche aus Aluminium, oder eine Kombination der aufgeführten Platten zum Einsatz. Die Dicke der eingesetzten Decklagen liegt vorzugsweise zwischen 0,5 mm und 20 mm, insbesondere zwischen 1 mm und 10 mm.

Als Kernlagen kommen Flächengebilde mit einem geringen Gewicht zum Einsatz. Dies sind beispielsweise Waben-, Falt- oder Steckstrukturen aus Papier, Pappe, Holz oder Leichtmetall, insbesondere Aluminium, oder Leichtwerkstoffe, wie leichte Holzwerkstoffplatten, vorzugsweise mit einer Dichte zwischen 80 und 400 kg/m³, besonders bevorzugt zwischen 120 und 250 kg/m³ und insbesondere zwischen 180 und 220 kg/m³.

Die Herstellung der Leichtbauplatten erfolgt üblicherweise, indem die Decklagen mit den Kernlagen diskontinuierlich oder insbesondere kontinuierlich verklebt werden. Dies erfolgt vorzugsweise, indem die Decklagen und/oder die Kernlagen mit einem Klebstoff versehen und danach zusammengebracht werden, wobei der Kleber aushärtet und die Bestandteile fest miteinander verbunden werden.

EP 1593438 beschreibt ein Verfahren zur Herstellung von Sandwich-Verbundelementen, zum Beispiel Metall-Schaumstoff-Verbundelementen mit Kernschichten aus Mineralfasern oder Platen aus Hartschaumstoff sowie Sandwich-Verbundelementen mit vorgefertigten, plattenförmigen Kernschichten. Im Verfahren nach EP 1593438 wird auf die Deckschichten ein Kleber mittels eines Drehtellers mit mindestens einer seitlichen Austrittsöffnung für den Klebstoff aufgebracht wird.

US 3246058 beschreibt ein Verfahren zur Herstellung von Leichtbauplatten aus mindestens einer Decklage und einer mit dieser verklebten Kernlage, die beispielsweise Pappwaben enthält, wobei der Kleber parallel zur Decklage mittels einer oder mehrerer Düsen auf die Deckschicht aufgetragen wird.

Der Auftrag des Klebers erfolgt üblicherweise mittels Auftragsköpfen, wie in EP 1 029 665 beschrieben, Rollen, wie in DE 42 37 025 beschrieben, oder Düsen, wie in WO 95/28533 beschrieben. Nachteilig bei der Verwendung von Rollen ist die Neigung zur Verschmutzung. Außerdem wird häufig zuviel Kleber aufgetragen. Nachteilig bei der Verwendung von Düsen ist die Gefahr der Aerosolbildung. Außerdem sind beide Verfahren auf die Verwendung von Einkomponentenklebern oder 2K-Hotmeltkleber limitiert.

Demzufolge sollte ein Verfahren gefunden werden, durch welches ein Kleber möglichst gleichmäßig auf Decklagen und/oder Kernlagen verteilt wird, das eine kontinuierliche Produktion zulässt, weitgehend aerosolfrei arbeitet und trotz geringer Klebermenge eine ausreichende Haftung gewährleistet. Das Verfahren soll kontinuierlich oder diskontinuierlich eingesetzt werden können.

Aufgabe der vorliegenden Erfindung war es nun, ein Verfahren zur Herstellung von Leichtbauplatten zu finden, bei dem der Kleber auf die Decklage und/oder Kernlage aufgebracht werden kann, bei dem kaum Aerosole freigesetzt werden, das wartungsarm ist, bei dem alle Typen von Klebern eingesetzt werden können, das eine kontinuierliche Produktion zulässt und eine möglichst gleichmäßige Verteilung des Klebers in der benötigten Menge über die gesamte Breite der Leichtbauplatten gewährleistet.

Die Aufgabe konnte überraschenderweise gelöst werden, indem der Kleber über mindestens eine in der Waagerechten, vorzugsweise parallel zur Deckschicht, befindliche rotierende Scheibe auf die Deckschicht aufgebracht wird.

Gegenstand der Erfindung ist somit ein Verfahren zur Herstellung von Leichtbauplatten aus mindestens einer Decklage und einer mit dieser verklebten Kernlage, wobei der Kleber auf mindestens eine Deckschicht aufgetragen wird, dadurch gekennzeichnet, dass der Auftrag des Klebers mittels einer oder mehrerer übereinander angeordneten rotierenden Scheibe(n) erfolgt, die in der Waagerechten oder in einer geringen Abweichung von der Waagerechten von bis zu 15°, vorzugsweise parallel zu der Decklage angebracht ist.

Gegenstand der Erfindung ist weiterhin eine Vorrichtung zur Herstellung von Leichtbauplatten durch Verkleben mindestens einer Decklage mit einer Kernlage, dadurch gekennzeichnet, dass sie zum Auftrag des Klebers auf die Decklage eine oder mehrere übereinander angeordnete rotierende Scheibe(n) enthält, die in der Waagerechten oder in einer geringen Abweichung von der Waagerechten von bis zu 15°, vorzugsweise parallel zu der Decklage angebracht ist

Der Austrag des Klebers erfolgt über die Scheibe, welche in der Waagerechten, vorzugsweise parallel über der unteren Deckschicht montiert ist und über einen Antrieb in Rotation versetzt werden kann. Die Scheibe kann auch mit einer Abweichung von bis zu 15° von der Waagerechten angebracht werden. Die Scheibe kann rund oder elliptisch sein. Bei einer kreisrunden Scheibe ist in den Randzonen der Deckschicht eine Anhäufung von Kleber im Vergleich zur Deckschichtmitte zu beobachten. Bevorzugt ist deshalb eine leicht elliptische Form der Scheibe, um die Anhäufung von Kleber in den Randzonen der Deckschicht zu minimieren. Vorzugsweise weist die Scheibe ein Längen-Breiten-Verhältnis von 1 bis 1,8 besonders bevorzugt von 1 bis 1,4 und insbesondere von 1,0 bis 1,25 auf.

Bei übereinander angeordneten Scheiben wird der Kleber bevorzugt auf die oberste Scheibe aufgegeben. Die Einspeisung von Kleber auf die unteren Scheiben erfolgt durch Löcher in der darüber liegenden Scheibe. Die Anzahl der Löcher beträgt 4 - 12, bevorzugt 4 - 8, besonders bevorzug 4 von je 100 - 900 mm², bevorzugt 100 - 650 mm² , besonders bevorzugt 100 - 400 mm². Vorzugsweise werden 2 bis 4, besonders bevorzugt 2 Scheiben übereinander eingesetzt.

Die Scheibe kann vollkommen flach oder an der Seite nach oben abgerundet oder abgekantet sein. Die Höhe des abgerundeten oder abgekanteten Randes beträgt vorzugsweise 1,0 - 30 mm. Bevorzugt wird eine an den Seiten nach oben abgerundete oder abgekantete Scheibe eingesetzt. In die Abkantung können Löcher oder Schlitze eingebracht sein, um den Austrag des Klebers zu gewährleisten. Durchmesser und Anzahl der Löcher oder Schlitze werden so aufeinander abgestimmt, dass ein möglichst gleichmäßiger feinverteilter Auftrag des Klebers auf die unterliegende Deckschicht möglich ist, sämtliches auf die Scheibe aufgebrachtes Material ausgetragen werden kann, und der Wartungsaufwand der Scheibe minimal ist. Vorzugsweise weist die Abkantung 4 - 64 Löcher beziehungsweise Schlitze mit einem Durchmesser beziehungsweise einer Breite von 0,5-5 mm, bevorzugt 16 - 50, beziehungsweise Schlitze mit einem Durchmesser beziehungsweise einer Breite von 1-4 mm, besonders bevorzugt 20 - 40 Löcher beziehungsweise Schlitze mit einem Durchmesser beziehungsweise einer Breite von 2-4 mm auf. Die Schlitze sind vorzugsweise nach oben offen.

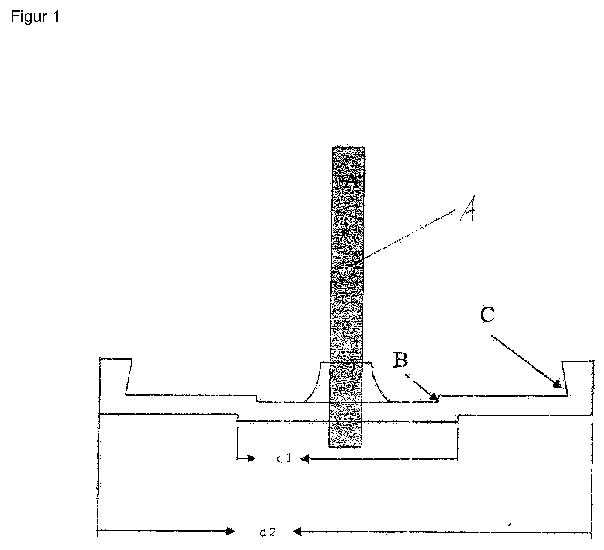

In einer Ausführungsform ist die Scheibe kaskadenartig gestaltet. Figur 1 zeigt die Seitenansicht einer solchen Scheibe. Dabei sind die Kaskaden von der Rotationsachse (A) nach außen hin ansteigend angeordnet. An den Übergängen von einer Kaskade zur benachbarten (B) können Löcher in der Scheibe angebracht sein so dass ein Teil des Klebers an diesen Kaskadenübergängen auf die untere Deckschicht ausgetragen werden kann. Solch eine kaskadenartig gestaltete Scheibe sorgt für einen besonders gleichmäßigen Auftrag des Klebers auf die darunter befindliche Deckschicht. Der Auftrag des Klebers auf die Scheibe erfolgt möglichst nah an der Rotationsachse. Überraschend wurde dabei gefunden, dass der Kleber besonders gleichmäßig auf die untere Deckschicht verteilt wird, wenn der Auftragspunkt des Klebers parallel zur Produktionsrichtung exakt vor bzw. hinter der Rotationsachse liegt. Es kann eine Scheibe mit 2-4, bevorzugt 2-3, besonders bevorzugt 2 Kaskaden eingesetzt werden.

Der Neigungswinkel der Löcher bzw. Schlitze, welche zum Austrag des Klebers in die Scheibe eingebracht werden, beträgt in bezug auf die untere Deckschicht etwa 0 - 70°, bevorzugt 10-70°, besonders bevorzugt 30-60°. Die Löcher können an den Kaskadenübergängen sowie an der äußeren Abkantung angebracht sein. Die Anzahl der Löcher nimmt dabei von Kaskade zu Kaskade von innen nach außen zu. In Bezug auf die Rotationsachse am innersten Kaskadenübergang (B) sind dabei 4-30, bevorzugt 12-25, besonders bevorzugt 12-20 Löcher mit einem Durchmesser von 1,0-5,0 mm angebracht. An der äußersten Abkantung (C) beträgt die Anzahl der Löcher, bzw. Schlitze 4 bis 64, bevorzugt 16 -50, besonders bevorzugt 20 - 40 mit einem Durchmesser von 1,0-5,0 mm. In einer besonders bevorzugten Ausführungsform der Scheibe werden die Löcher bzw. Schlitze an der äußeren Abkantung alternierend mit unterschiedlichen Neigungen zur Deckschicht gestaltet. Das Verhältnis der Durchmesser benachbarter Kaskaden dₙ/dₙ₋₁ beträgt 1,2-4,5, bevorzugt 2-4. Die Löcher können in den unterschiedlichen Kaskaden unterschiedliche Winkel und Durchmesser aufweisen. Im allgemeinen nehmen die Durchmesser der Löcher zum Rand der Scheibe hin ab.

Die Scheibe weist, abhängig von der Breite der Deckschicht, einen Durchmesser zwischen 0,05 bis 0,4 m, bevorzugt 0,1 bis 0,30 m, besonderes bevorzugt 0,12 bis 0,25 m, bei ovalen Scheiben bezogen auf die lange Seite der ovalen Form, auf. Sie ist in einer Höhe von 0,02 - 0,2 m, bevorzugt 0,03 - 0,18 m, besonderes bevorzugt 0,03 - 0,15 m über der zu benetzenden Deckschicht angebracht.

Die rotierende Scheibe kann auch die Form eines ebenen, mindestens vier-, vorzugsweise vier- oder fünfzackigen Sterns, der in der Draufsicht abgerundete Spitzen und keine geraden Linien aufweist, und dessen Spitzen nach oben gebogen sein können, oder, wie beschrieben, einer ebenen runden Scheibe mit kaskadenartig nach außen ansteigenden Umrandungen auf der Oberseite und darin befindlichen Austrittsöffnungen, insbesondere Bohrungen, besitzen.

Der Benetzungsradius des Klebers auf der unteren Deckschicht liegt vorzugsweise zwischen 0,25 - 2,4 m, bevorzugt 0,35 - 1,20 m.

Im allgemeinen ist eine Scheibe ausreichend, um einen ausreichenden Kleberauftrag zu gewährleisten. Falls auf eine breitere Fläche Kleber aufgebracht werden soll, kann es vorteilhaft sein, mindestens zwei der oben beschriebenen rotierenden Scheiben einzusetzen, die hintereinander, nebeneinander oder versetzt zueinander angebracht werden können. Damit wird vermieden, dass der Kleber eine zu hohe Verweilzeit auf der Scheibe hat und auf der Scheibe aushärtet.

Die Drehzahl der Scheibe liegt vorzugsweise zwischen 200 - 2500 min⁻¹, besonders bevorzugt zwischen 200 - 2000 min⁻¹, und insbesondere zwischen 300 - 1500 min⁻¹.

Die Menge des auf die Deckschicht aufgetragenen Klebers liegt zwischen 20 - 300 g/m², bevorzugt 40 - 200 g/m², besonders bevorzugt 50 - 120 g/m².

Bei der Verwendung von Zweikomponentenkleber wird der Kleber vor dem Aufbringen auf die rotierende Scheibe maschinell vermischt, wobei Hoch- oder Niederdruckmischer, vorzugsweise Niederdruckmischer, verwendet werden können und über eine geeignete Austragsvorrichtung, beispielsweise ein nachgeschaltetes Rührorgan, auf die Scheibe aufgetragen. Wird die Scheibe nun mittels eines Antriebs in Rotation versetzt, erfolgt eine flächige Verteilung des Klebers auf die unter der Scheibe befindliche, kontinuierlich beförderte Decklage. Zum Vermischen und Auftrag des Klebers auf die Scheibe kann beispielsweise ein statischer oder dynamischer Mischer aus Kunststoff verwendet werden. Die Austragsmenge des Klebers wird so auf die Geschwindigkeit der kontinuierlich arbeitenden Anlage abgestimmt, dass die gewünschte Auftragsmenge pro m² Decklage realisiert werden kann.

Die Höhe der Scheibe über der zu benetzenden Lage, der Scheibendurchmesser sowie die Rotationsgeschwindigkeit sind so aufeinander abgestimmt, dass der ausgetragene Kleber die Decklage bis zu den Rändern möglichst gleichmäßig benetzt und liegt üblicherweise im oben beschriebenen Bereich.

Der Kleber wird lateral weggeschleudert und auf die sich in der Waagerechten, vorzugsweise parallel und unterhalb zur rotierenden Scheibe befindliche Decklage verteilt. Überraschend wurde nun gefunden, dass der Auftrag mittels oben beschriebener Technik weitgehend aerosolfrei erfolgen kann.

Als Aerosole werden dabei kolloidale Systeme aus Gasen, wie Luft, mit darin fein verteilten kleinen flüssigen Teilchen von etwa 10⁻⁷ bis 10⁻³ cm Durchmesser bezeichnet.

Bei den aus ökonomischer Sicht notwendigen geringen Auftragsmengen des Klebers ist eine vollständige Benetzung der unteren Deckschicht mit dem Kleber nur schwierig erreichbar. Überraschenderweise wurde nun aber gefunden, das die mittels der erfindungsgemäßen Auftragstechnik bei geringen Auftragsmengen erreichte Beschichtung der unteren Deckschicht ausreichend ist, um die erforderliche Zugfestigkeit zwischen der behandelten Deckschicht und der darüber befindlichen Kernlage zu erreichen.

Überraschend wurde weiterhin gefunden, dass das Auftragsbild des Klebers auf die untere Decklage gleichmäßiger wird, wenn die Menge an aufgetragenem Kleber im Bereich von 50 - 200 g/m² liegt. Die Gleichmäßigkeit des Auftragsbildes wird ermittelt, indem die Verteilung des Klebers über die Oberfläche der Deckschicht visuell beurteilt wird. Bei einer weiteren Möglichkeit dieser Bestimmung wird ein Papierstreifen auf die Anlage gelegt und vor und nach der Benetzung durch den Kleber ausgewogen.

Nach erfolgtem Auftrag des Klebers auf die untere Decklage erfolgt das Aufbringen der Kernlage. Darauf wird die obere Decklage aufgebracht. Diese wird dazu wie oben beschrieben ebenfalls mit dem Kleber benetzt. Danach wird sie gedreht und mit der mit dem Kleber bedeckten Seite auf die Kernlage gelegt.

Es ist prinzipiell auch möglich, wie oben beschrieben Kleber auf die Kernlage zu geben und darauf die Decklage zu setzen. Es hat sich jedoch gezeigt, dass die Festigkeit der so hergestellten Verbindung geringer ist als beim Aufbringen des Klebers auf die Decklage.

Als Kleber können die für diesen Einsatzzweck üblichen und bekannten Kleber eingesetzt werden. Entscheidend ist, dass die Kleber eine solche Viskosität aufwiesen, dass sie mit der Scheibe auf die Schichten aufgetragen werden können und nach dem Auftrag noch als Kleber wirken. Dies können zum Beispiel Kleber auf Basis von Polyurethan, Harnstoff, Polyvinylacetat oder Hot-Melts sein.

In einer bevorzugten Ausführungsform des erfindungsgemäßen Verfahrens werden als Kleber solche auf Isocyanatbasis eingesetzt. Diese sind im allgemeinen erhältlich durch Umsetzung von Polyisocyanaten mit Verbindungen mit zwei gegenüber Isocyanaten reaktiven Wasserstoffatomen, wobei das Umsetzungsverhältnis vorzugsweise so gewählt wird, dass im Reaktionsgemisch das Verhältnis von Anzahl an Isocyanatgruppen zu Anzahl an gegenüber Isocyanaten reaktiven Gruppen 0,8 bis 1,8 : 1, bevorzugt 1 bis 1,6 : 1 beträgt.

Als Polyisocyanate kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI).

Bevorzugt werden dabei die Isocyanate der BASF AG Lupranat^{®} M 10, Lupranat^{®} M 20, Lupranat^{®} M 50, Lupranat^{®} M 70 und Lupranat^{®} M 200 eingesetzt.

Als Verbindungen mit mindestens zwei gegenüber Isocyanat reaktiven Wasserstoffatomen kommen im allgemeinen solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen.

Vorzugsweise eingesetzt werden Polyetherole und/oder Polyesterole, besonders bevorzugt Polyetherpolyole. Die Hydroxylzahl der verwendeten Polyetherole und/oder Polyesterole beträgt vorzugsweise 25 bis 800 mg KOH/g, die Molekulargewichte sind im allgemeinen größer als 400. Die Polyurethane können ohne oder mit Kettenverlängerungs- und/oder Vernetzungsmitteln hergestellt werden. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400, vorzugsweise von 60 bis 300, zum Einsatz.

Die Polyolkomponente des Klebers weist dabei vorzugsweise eine Viskosität von 50 - 1000 mPas, bevorzugt 100 - 800 mPas, besonders bevorzugt 100 - 400 mPas (25°C) auf.

Im Kleber können gegebenenfalls additive oder reaktive Flammschutzmittel enthalten sein. Derartige Flammschutzmittel werden im allgemeinen in einer Menge von 0,1 bis 30 Gew.-%, bezogen auf das Gesamtgewicht der Polyolkomponente, eingesetzt.

Bei der Umsetzung der Polyisocyanate mit den Polyolen werden bevorzugt keine physikalischen Treibmittel zugegeben. Chemische Treibmittel, vorzugsweise Wasser, gegebenenfalls im Gemisch mit Ameisensäure, können zugegeben werden, um eine geringe Volumenvergrößerung des Klebers zu erzielen. Diese Volumenvergrößerung dient dazu, Unebenheiten zwischen den Kontaktflächen der Decklage und der Kernlage auszugleichen, sowie zur Erhöhung der Haftfläche des Klebers zu der Kernlage bei der Verklebung von Waben oder sonstige gelöcherte, poröse oder netzartigen Materialien. Die ausgehärteten Polyurethankleber weisen dadurch eine Dichte von 200 bis 1200 g/l, bevorzugt von 100 bis 1000 g/l, besonders bevorzugt von 200 bis 900 g/l auf.

Als Decklagen kommen, wie beschrieben, zumeist Spanplatten, MDF-Platten oder OSB-Platten, sowie Kunststoffplatten, Metallplatten, insbesondere solche aus Aluminium, oder eine Kombination der aufgeführten Platten zum Einsatz.

Als Kernlagen kommen Flächengebilde mit einem geringen Gewicht zum Einsatz. Dies sind beispielsweise Waben- Falt oder Steckstrukturen aus Papier, Pappe, Holz oder Leichtmetall, insbesondere Aluminium oder Leichtwerkstoffe wie leichte Holzwerkstoffplatten, vorzugsweise mit einer Dichte zwischen 80 und 400kg/m³ besonders bevorzugt zwischen 120 und 250 kg/m³ und insbesondere zwischen 180 und 220 kg/m³ zur Anwendung.

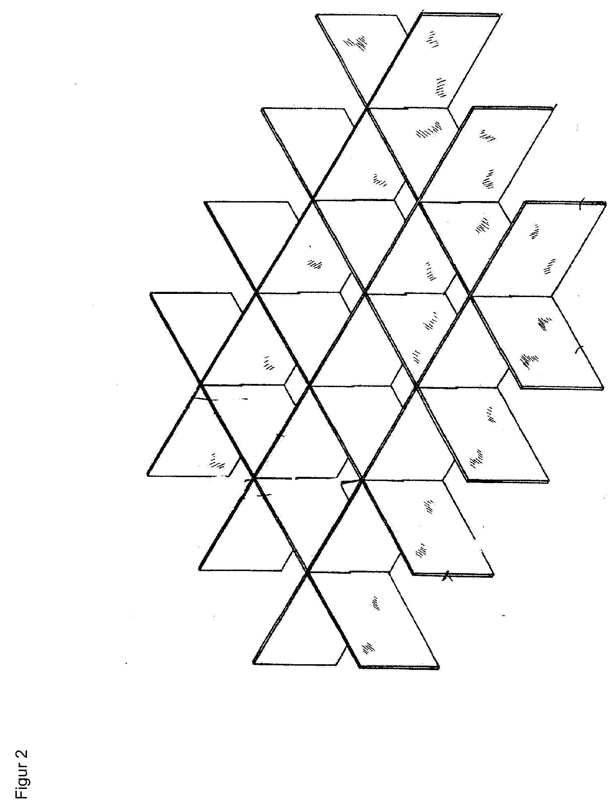

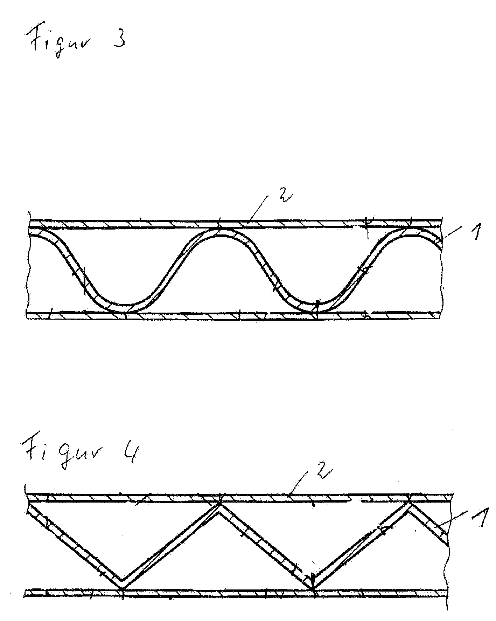

Bevorzugt eingesetzt werden Waben-, Falt- oder Steckstrukturen aus Papier, Pappe, Holz oder Leichtmetall, insbesondere Aluminium. Beispiele für die Ausgestaltung der Strukturen sind Sechseckwaben, streifenförmiges Material mit Einschnitten, das rechtwinklig ineinander gesteckt und danach an den Kontaktstellen miteinander verklebt werden kann, wie in Figur 2 dargestellt, oder streifenförmiges Material in Wellen- oder zick-zack-Form (1), das an den Berührungsstellen mit der Deckschicht (2) verklebt werden kann, wie in den Figuren 3 und 4 dargestellt.

In der Praxis war es bisher Ziel für die Herstellung von Leichtbauplatten, einen möglichst geschlossenen dünnen Kleberfilm aufzutragen. Überraschenderweise wurde nun gefunden, dass es vorteilhaft ist, wenn der Kleber in Form von diskreten Punkten auf der Oberfläche vorliegt. Durch die so erhaltene punktförmige Verklebung durch tröpfchenförmigen Auftrag kann eine wesentlich verbesserte Haftfestigkeit erreicht werden.

Die Herstellung der Leichtbauplatten kann, wie beschrieben, diskontinuierlich oder kontinuierlich erfolgen. Bei der diskontinuierlichen Herstellung wird jeweils eine zugeschnittene untere und obere Deckschicht mit dem Kleber versehen, auf die untere Deckschicht die Kernlage und darauf die obere Deckschicht aufgebracht.

Bei der kontinuierlichen Herstellung können zugeschnittene untere und obere Deckschichten kontinuierlich transportiert, mittels der erfindungsgemäß verwendeten Vorrichtung mit Kleber bedeckt, auf die untere Deckschicht die Kernlage und darauf die obere Deckschicht aufgebracht werden.

Es ist auch möglich, zumindest die untere Deckschicht kontinuierlich von einer Rolle abzurollen, darauf den Kleber und darauf die Kernlage zu geben. Die obere Deckschicht kann ebenfalls kontinuierlich von einer Rolle entnommen oder in Form von zugeschnittenen Teilen aufgebracht werden.

Durch das erfindungsgemäße Verfahren können mit einem sparsamen Einsatz von Kleber Leichtbauplatten mit einer hohen Zugfestigkeit hergestellt werden. Die Vorrichtung für den Auftrag des Klebers ist sehr betriebssicher und wartungsarm. Sie kann problemlos auch in vorhandene Anlagen zur Herstellung von Leichtbauplatten eingebaut werden.

## Patentansprüche

1. Verfahren zur Herstellung von Leichtbauplatten aus mindestens einer Decklage und einer mit dieser verklebten Kernlage, wobei der Kleber auf mindestens eine Deckschicht aufgetragen wird, **dadurch gekennzeichnet, dass** der Auftrag des Klebers mittels einer oder mehrerer rotierenden Scheibe(n) erfolgt, die in der Waagerechten oder in einer geringen Abweichung von der Waagerechten von bis zu 15°, vorzugsweise parallel zu der Decklage angebracht ist, wobei die Scheibe an den Rändern nach oben abgerundet oder abgekantet ist und als Kernlage eine Waben-, Falt- oder Steckstruktur aus Papier, Pappe, Holz oder Leichtmetall eingesetzt wird.

2. Verfahren nach Anspruch 1, **dadurch gekennzeichnet, dass** die rotierende flache Scheibe als ebene Scheibe mit kaskadenartig ansteigenden Umrandungen ausgestaltet ist.

3. Verfahren nach Anspruch 1, **dadurch gekennzeichnet, dass** die rotierende flache Scheibe als Ellipse ausgestaltet ist.

4. Verfahren nach Anspruch 1, **dadurch gekennzeichnet, dass** die rotierende flache Scheibe als ebener, mindestens vierzackiger Stern ausgestaltet ist.

5. Verfahren nach Anspruch 1, **dadurch gekennzeichnet, dass** die als ebene Scheibe mit kaskadenartig ansteigenden Umrandungen ausgestaltete rotierende Scheibe Austrittsöffnungen in Form von Bohrungen oder Schlitzen aufweist.

6. Verfahren nach Anspruch 1, **dadurch gekennzeichnet, dass** mindestens zwei übereinander angeordnete rotierende Scheiben verwendet werden.

7. Verfahren nach Anspruch 1, **dadurch gekennzeichnet, dass** als Kleber ein Kleber auf Isocyanatbasis eingesetzt wird.

8. Verfahren nach Anspruch 1, **dadurch gekennzeichnet, dass** als Decklagen Spanplatten, MDF-Platten, OSB-Platten, Kunststoffplatten oder Metallplatten eingesetzt werden.

9. Verfahren nach Anspruch 1, **dadurch gekennzeichnet, dass** als Kernlagen leichte Holzwerkstoffplatten mit einer Dichte zwischen 80 und 400kg/m³ eingesetzt werden.

## Claims

1. A method for the production of lightweight building boards comprising at least one outer layer and a core layer adhesively bonded to this, the adhesive being applied to at least one outer layer, wherein the application of the adhesive is effected by means of one or more rotating disk(s) which is or are mounted horizontally or with a the slight deviation of up to 15° from the horizontal, preferably parallel to the outer layer, the disk being rounded or beveled at the edges facing upward, and a honeycomb, folded or plug-type structure comprising paper, board, wood or light metal being used as core layer.

2. The method according to claim 1, wherein the rotating flat disk is in the form of a planar disk having borders ascending in a cascade-like manner.

3. The method according to claim 1, wherein the rotating flat disk is in the form of an ellipse.

4. The method according to claim 1, wherein the rotating flat disk is in the form of a planar, at least four-pointed planar star.

5. The method according to claim 1, wherein the rotating disk in the form of a planar disk having borders ascending in a cascade-like manner has outlet orifices in the form of holes or slots.

6. The method according to claim 1, wherein at least two rotating disks arranged one on top of the other are used.

7. The method according to claim 1, wherein the adhesive used is an isocyanate-based adhesive.

8. The method according to claim 1, wherein particleboards, MDF boards, OSB boards, plastic boards or metal plates are used as outer layers.

9. The method according to claim 1, wherein light wood-based boards, having a density of from 80 to 400 kg/m³, are used as core layers.

## Revendications

1. Procédé de fabrication de panneaux légers constitués d'au moins une couche de couverture et d'une couche de noyau collée à celle-ci, la colle étant appliquée sur au moins une couche de couverture, **caractérisé en ce que** l'enduction de la colle s'effectue au moyen d'une ou plusieurs lames rotatives qui sont montées à l'horizontale ou suivant un angle s'écartant faiblement de l'horizontale, d'au maximum 15°, de préférence parallèlement à la couche de couverture, la lame étant arrondie ou repliée vers le haut au niveau des bords et une structure en nid d'abeilles, à pliage ou emboîtement, ou en papier, carton, bois ou métal léger étant utilisée comme couche de noyau.

2. Procédé selon la revendication 1, **caractérisé en ce que** la lame plate rotative est configurée sous forme de lame plane avec des bordures montant en cascade.

3. Procédé selon la revendication 1, **caractérisé en ce que** la lame plate rotative est configurée sous forme d'ellipse.

4. Procédé selon la revendication 1, **caractérisé en ce que** la lame plate rotative est configurée sous forme d'étoile plane, au moins à quatre branches.

5. Procédé selon la revendication 1, **caractérisé en ce que** la lame rotative réalisée en tant que lame plane avec des bordures montant en cascade présente des ouvertures de sortie en forme de perçages ou de fentes.

6. Procédé selon la revendication 1, **caractérisé en ce que** l'on utilise au moins deux lames rotatives disposées l'une au-dessus de l'autre.

7. Procédé selon la revendication 1, **caractérisé en ce que** l'on utilise en tant que colle une colle à base d'isocyanate.

8. Procédé selon la revendication 1, **caractérisé en ce que** l'on utilise en tant que couches de couverture des panneaux de particules, des panneaux de MDF, des panneaux OSB, des panneaux en matière plastique ou des plaques métalliques.

9. Procédé selon la revendication 1, **caractérisé en ce que** l'on utilise comme couches de noyau des panneaux de bois légers ayant une densité comprise entre 80 et 400 kg/m³.
